# EUROPÄISCHE PATENTANMELDUNG

(11) **EP 2 492 656 A2**
(43) Veröffentlichungstag der Anmeldung: **29.08.2012**
(21) Anmeldenummer: 12168287.6
(22) Anmeldetag: 06.08.2009
(51) Int. Cl.: G01K 1/08

(54) **Verfahren zum Vergießen einer Gießform**

(30) Priorität: 23.09.2008 DE 102008048583
(62) Teilanmeldung aus: 09781533.6
(71) Anmelder: ENDRESS + HAUSER WETZER GmbH + Co. KG, 87484 Nesselwang (DE)
(72) Erfinder: Boguhn, Dirk, 81245 München (DE); Iselt, Torsten, 87435 Kempten (DE)
(74) Vertreter: Andres, Angelika Maria

(57) **Zusammenfassung**

Verfahren zum Vergießen einer zumindest teilweise topfförmigen Gießform, wobei die Gießform zumindest teilweise mit einer Vergussmasse vergossen wird, welche mindestens aus einer ersten Komponente und einer zweiten Komponente besteht, wobei die Gießform zumindest teilweise mit mindestens folgenden Schritten mit der Vergussmasse vergossen wird: dass mindestens eine vorgebbare Menge der ersten Komponente der Vergussmasse in die Gießform eingebracht wird, dass mindestens eine vorgebbare Menge der zweiten Komponente der Vergussmasse in die Gießform eingebracht wird, und dass die Gießform gerüttelt und/oder in Schwingungen mit einer vorgebbaren Frequenz versetzt wird.

## Beschreibung

Die Erfindung bezieht sich auf ein Verfahren zum Vergießen einer zumindest teilweise topfförmigen Gießform, wobei die Gießform zumindest teilweise mit einer Vergussmasse vergossen wird, welche mindestens aus einer ersten Komponente und einer zweiten Komponente besteht.

Bei der Herstellung von Temperaturmessgeräten gibt es beispielsweise die seit langem genutzte Technologie, die Temperatursensoren - insbesondere Pt-Widerstandssensoren in Dünnschichtausführung - in teilweise reinen Keramikpulvern (MgO, Al₂O₃) zu kapseln bzw. einzubetten. Dabei werden zumeist mehrere Ziele verfolgt: Zum einen sollen die mechanisch im Allgemeinen kaum belastbaren Sensorelemente fixiert werden. Zum anderen sollen die Anschlussdrähte der Sensorelemente auch bei hohen Temperaturen von 600°C oder mehr gegeneinander und auch gegenüber einem metallischen Gehäuse bzw. einem Thermometermantel elektrisch isoliert werden. Weiterhin sollen Verunreinigungen und/oder chemische Veränderungen des Sensorelements (insbesondere der temperatursensitiven Platin-Dünnschicht-Sensoren) über längere Zeit möglichst ausgeschlossen werden können. Das Erreichen dieser Ziele gelingt in der Praxis meist nur begrenzt.

Bessere Ergebnisse lassen sich erzielen, wenn statt eines mehr oder weniger komprimierten Keramikpulvers ein Keramikverguss verwendet wird, welcher aushärtet und das Sensorelement in einem kompakten, vergleichsweise festen Keramikblock sicher einschließt und kapselt. Als Gießform, in welche der Keramikverguss und das Sensorelement eingebracht und ausgehärtet werden, kommen entweder kleine, angepasste Keramikformteile (z.B. Röhrchen) in Betracht oder sogar die Stahl-Spitze bzw. die Kappe des Messgeräts bzw. des Thermometers selbst, in welche das Sensorelement einzubauen ist. Dabei ist das einzubringende Vergussvolumen mit nur einigen wenigen 100 mm³ vergleichsweise gering.

Zumeist werden für solche Keramikvergüsse feine Pulver in größeren Mengen mit Wasser oder einer anderen Flüssigkeit in einem festen Masseverhältnis separat vermischt und dann in die Gießform dosiert eingebracht, wo sie langsam abbinden und aushärten. Eine Reihe von Keramikvergüssen ist allerdings nach ihrem Anmischen - beispielsweise vergleichbar Gips - nur relativ kurze Zeit (einige wenige Minuten) gieß- und dispensfähig. Danach setzt bereits eine Verfestigung ein, so dass dieser Verguss kaum noch förderbar und mit gängigen Verfahren nicht mehr definiert dosierbar ist. Dies gilt umso mehr, wenn es sich um kleine Füllvolumina handelt. Eine für das Vergießen verwendete Vergussvorrichtung wäre ständig aufwändig zu reinigen und ein Großteil des angemischten Keramikvergusses wäre unbrauchbar.

So zeigt die Patentschrift GB 1103390 eine Pyrometer-Sonde, die aus einem leitenden Rohr besteht, in dem ein temperaturempfindlicher Widerstand in ein isolierendes Pulver eingebettet ist. Das Rohr wird während der Befüllung mit dem Pulver in Vibrationen versetzt, um das Pulver zu verdichten.

Ferner zeigt die Offenlegungsschrift US 2007104247 einen in einen Zement eingebetteten Temperatursensor. Der Zement wird durch Mischen von Wasser und einem Magnesiumoxid-Zement hergestellt und in eine Hülse eingefülft. Anschließend wird der Temperatursensor in den Zement eingebettet.

Die Aufgabe besteht daher darin, ein Verfahren zum reproduzierbaren Anmischen eines Vergusses und dessen Einbringen in vergleichsweise kleinen Mengen vorzuschlagen.

Die Aufgabe wird durch ein Verfahren zum Vergießen einer zumindest teilweise topfförmigen Gießform gelöst, wobei die Gießform zumindest teilweise mit einer Vergussmasse vergossen wird, welche mindestens aus einer ersten Komponente und einer zweiten Komponente besteht, dabei sieht das erfindungsgemäße Verfahren vor, dass die Gießform zumindest teilweise mit mindestens folgenden Schritten mit der Vergussmasse vergossen wird: dass mindestens eine vorgebbare Menge der ersten Komponente der Vergussmasse in die Gießform eingebracht wird, dass mindestens eine vorgebbare Menge der zweiten Komponente der Vergussmasse in die Gießform eingebracht wird, und dass die Gießform gerüttelt und/oder in Schwingungen mit einer vorgebbaren Frequenz versetzt wird.

Erfindungsgemäß wird somit das Anmischen des Vergusses direkt in dem auszugießenden Volumen vorgenommen. Beispielsweise handelt es sich um eine zylindrische, einseitig geschlossene Stahlkappe mit Außen-Durchmesser 6 mm und einer Höhe von 15 mm, welche als Spitze von Thermometer-Messeinsätzen verbaut wird.

In unterschiedlichen Ausgestaltungen werden entweder im Wesentlichen zeitgleich oder abwechselnd die zumindest zwei Komponenten in definierten Mengen bzw. Teilmengen in die Gießform eingebracht. Dabei kann eine Komponente flüssig und eine pulverförmig sein. Die Komponenten werden vorzugsweise gleichmäßig eingebracht. Dabei wird die Gießform beispielsweise permanent gerüttelt bzw. sie erfährt Vibrationen einer passend gewählten Frequenz. Durch dieses Vibrierenlassen werden die notwendige Durchmischung beider Komponenten und auch eine relativ hohe Verdichtung des Keramikschlickers erreicht. Beispielsweise werden Luftblasen, die beim herkömmlichen mechanischen Rühren in der Regel im Verguss verbleiben und nach dem Aushärten zu einer unerwünschten Porosität führen, durch das Vibrieren dazu angeregt, aufzusteigen und auszugasen.

In einer Ausgestaltung werden die Komponenten in mehreren Schichten, d.h. in jeweils zumindest zwei Teilmengen eingebracht. In einer Ausgestaltung werden beginnend mit der flüssigen Komponente die beiden Teilkomponenten eingebracht. Dabei wird in einer Ausgestaltung die Vergussform bzw. die Stahlkappe einem ständigen Rütteln unterzogen. In einer Ausgestaltung werden die beiden Komponenten jeweils zu einem Viertel der Gesamtfüllmenge eingebracht. Insbesondere werden vergleichsweise geringe Schichtdicken der Komponenten angestrebt, so dass ein solcher "Sandwichaufbau" ausschließlich durch Vibration eine ausreichend gute Durchmischung beider Komponenten erlaubt. Die Anzahl der Teilschichten hängt dabei auch von der zu erreichenden Gesamthöhe des zu vergießenden Volumens ab. Meist ist allerdings bereits eine geringe Anzahl von z.B. drei bis fünf Schichten ausreichend. Prinzipiell können diese Teilschichten fast beliebig dünn realisiert werden. Begrenzt wird dies von der Messgenauigkeit der Dosiereinrichtungen für die Pulver- bzw. die flüssige Vergusskomponente.

Eine Ausgestaltung des Verfahrens sieht vor, dass die Vergussmasse ausgehärtet wird.

Eine Ausgestaltung des Verfahrens beinhaltet, dass die erste Komponente und die zweite Komponente nacheinander in die Gießform eingebracht werden. Das anschließende Einbringen erfolgt dann jeweils abwechselnd.

Eine Ausgestaltung des Verfahrens sieht vor, dass die erste Komponente und die zweite Komponente im Wesentlichen zeitgleich in die Gießform eingebracht werden.

Eine Ausgestaltung des Verfahrens beinhaltet, dass die erste Komponente und/oder die zweite Komponente als Schicht in die Gießform eingebracht werden/wird.

Eine Ausgestaltung des Verfahrens sieht vor, dass die erste Komponente und die zweite Komponente mehrfach abwechselnd in vorgebbaren Mengen in die Gießform eingebracht werden.

Eine Ausgestaltung des Verfahrens beinhaltet, dass die Gießform während des Einbringens mindestens einer Komponente der Vergussmasse gerüttelt und/oder in Schwingungen mit einer vorgebbaren Frequenz versetzt wird.

Eine Ausgestaltung des Verfahrens sieht vor, dass die Gießform nach dem Einbringen einer Komponente und vor dem Einbringen der anderen Komponente gerüttelt und/oder in Schwingungen mit einer vorgebbaren Frequenz versetzt wird.

Eine Ausgestaltung des Verfahrens beinhaltet, dass die Gießform nach dem vollständigen Einbringen der ersten Komponente und der zweiten Komponente gerüttelt und/oder in Schwingungen mit einer vorgebbaren Frequenz versetzt wird.

Eine Ausgestaltung des Verfahrens sieht vor, dass die erste Komponente im Wesentlichen flüssig ist, dass die zweite Komponente im Wesentlichen pulverförmig ist, und dass es sich bei der Vergussmasse um einen Keramikverguss handelt.

Eine Ausgestaltung des Verfahrens beinhaltet, dass die Gießform mit einem Gehäuseelement einer Messvorrichtung verbunden wird.

Eine Ausgestaltung des Verfahrens sieht vor, dass die Sensorvorrichtung mit einer Elektronikkomponente der Messvorrichtung verbunden wird.

Es ist somit auch kleine Mengen eines Zweikomponenten-Keramikvergusses direkt in dem zu vergießenden Hohlraum zu erzeugen.

Die Erfindung wird anhand der nachfolgenden Zeichnung näher erläutert. Es zeigt:

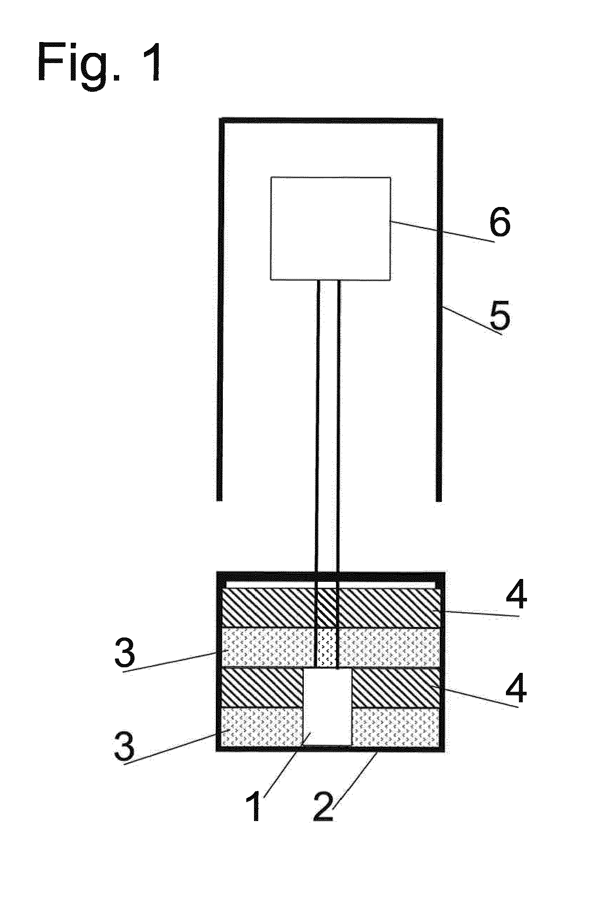

Fig. 1: einen Schnitt durch ein im Vergießen begriffenes Messgerät.

Die Fig. 1 zeigt als Beispiel für ein zu fertigendes Messgerät ein sog. Thermometer, d.h. die Prozessgröße Temperatur wird bestimmt bzw. überwacht. Das Sensorelement 1 ist beispielsweise ein Dünnschichtsensor, welcher durch ein entsprechendes Gehäuse vor den Prozessbedingungen geschützt wird. Hierfür ist das Sensorelement 1 in eine Kappe eingebracht, welche erfindungsgemäß auch als Gießform 2 dient. Der erfindungsgemäße Verguss kann auch nach dem Fertigungsverfahren in der Gießform 2 verbleiben - wie im hier gezeigten Fall - oder die Gießform 2 wird nach dem Aushärten des Vergusses - je nach Stabilität ggf. auch schon vorher - wieder entfernt. In die Gießform 2 sind die beiden Teilkomponenten 3, 4 schichtweise eingebracht worden, wobei vorzugsweise mit der flüssigen Komponente begonnen wurde. Während des Einfüllens wird dabei die Gießform 2 ständig gerüttelt. D.h. in der praktischen Umsetzung wäre eine - wie hier gezeigte - Trennung der Schichten nicht mehr gegeben.

Das Sensorelement 2 wird mit einer Elektronikkomponente 6 des Messgerätes verbunden, wobei die Elektronikkomponente 6 beispielsweise der Verarbeitung des Messwertes des Sensorelements 2 dient. Da die Gießform 2 hier ein Bestandteil des Messgerätes ist, wird dann in einem nächsten Schritt die Gießform 2 mit dem Gehäuseelement 5 des Gerätes verbunden.

Die erfindungsgemäßen Verfahren zur Fertigung einer Messvorrichtung bzw. zum Vergießen einer Gießform sehen somit vor, dass die Komponenten, welche den Verguss bilden, entweder nacheinander oder im Wesentlichen zeitgleich in die Gießform eingebracht werden und dass während oder zumindest teilweise während des Einbringens die Gießform mit den in sie eingebrachten Vergusskomponenten mechanischen Bewegungen unterzogen wird.

### Bezugszeichenliste

- 1: Sensorelement
- 2: Gießform
- 3: Erste Komponente
- 4: Zweite Komponente
- 5: Gehäuseelement
- 6: Elektronikkomponente

## Patentansprüche

1. Verfahren zum Vergießen einer zumindest teilweise topfförmigen Gießform (2),
wobei die Gießform (2) zumindest teilweise mit einer Vergussmasse vergossen wird, welche mindestens aus einer ersten Komponente (3) und einer zweiten Komponente (4) besteht,
**dadurch gekennzeichnet,**
**dass** die Gießform (2) zumindest teilweise mit mindestens folgenden Schritten mit der Vergussmasse vergossen wird:
**dass** mindestens eine vorgebbare Menge der ersten Komponente (3) der Vergussmasse in die Gießform (2) eingebracht wird,
**dass** mindestens eine vorgebbare Menge der zweiten Komponente (4) der Vergussmasse in die Gießform (2) eingebracht wird,
und
**dass** die Gießform (2) gerüttelt und/oder in Schwingungen mit einer vorgebbaren Frequenz versetzt wird.

2. Verfahren nach Anspruch 1,
**dadurch gekennzeichnet,**
**dass** die Vergussmasse ausgehärtet wird.

3. Verfahren nach Anspruch 1 oder 2,
**dadurch gekennzeichnet,**
**dass** die erste Komponente (3) und die zweite Komponente (4) nacheinander in die Gießform (2) eingebracht werden
oder
**dass** die erste Komponente (3) und die zweite Komponente (4) im Wesentlichen zeitgleich in die Gießform (2) eingebracht werden.

4. Verfahren nach einem der Ansprüche 1 bis 3,
**dadurch gekennzeichnet,**
**dass** die erste Komponente (3) und/oder die zweite Komponente (4) als Schicht in die Gießform (2) eingebracht werden/wird.

5. Verfahren nach einem der Ansprüche 1 bis 4,
**dadurch gekennzeichnet,**
**dass** die erste Komponente (3) und die zweite Komponente (4) mehrfach abwechselnd in vorgebbaren Mengen in die Gießform (2) eingebracht werden.

6. Verfahren nach einem der Ansprüche 1 bis 5,
**dadurch gekennzeichnet,**
**dass** die Gießform (2) während des Einbringens mindestens einer Komponente (3) der Vergussmasse gerüttelt und/oder in Schwingungen mit einer vorgebbaren Frequenz versetzt wird
oder
**dass** die Gießform (2) nach dem Einbringen einer Komponente (3) und vor dem Einbringen der anderen Komponente (4) gerüttelt und/oder in Schwingungen mit einer vorgebbaren Frequenz versetzt wird.

7. Verfahren nach einem der Ansprüche 1 bis 6,
**dadurch gekennzeichnet,**
**dass** die Gießform (2) nach dem vollständigen Einbringen der ersten Komponente (3) und der zweiten Komponente (4) gerüttelt und/oder in Schwingungen mit einer vorgebbaren Frequenz versetzt wird.
